# EUROPEAN PATENT SPECIFICATION

(11) **EP 2 638 729 B1**
(45) Date of publication and mention of the grant of the patent: **08.06.2016**
(21) Application number: 10812851.3
(22) Date of filing: 14.11.2010
(51) Int. Cl.: H04W 28/08

(54) **CIRCUIT SWITCHED FALLBACK PAGING FOR MOBILITY MANAGEMENT ENTITY POOL**
LEITUNGSVERMITTELTES FALLBACK-PAGING FÜR MME-POOL
RADIOMESSAGERIE DE REPLI À COMMUTATION DE CIRCUITS POUR GROUPEMENT D'ENTITÉS DE GESTION DE LA MOBILITÉ

(43) Date of publication of application: 18.09.2013
(60) Divisional application: 16167617.6
(73) Proprietor: Telefonaktiebolaget LM Ericsson (publ), 164 83 Stockholm (SE)
(72) Inventor: YANG, Yong, S-42836 Kållered (SE); RYDNELL, Gunnar, SE-41132 Göteborg (SE); SANDER, Ann-Christine, S-41757 Göteborg (SE)
(74) Representative: Ericsson
(86) International application number: PCT/EP2010/006927
(87) International publication number: WO 2012/062344

(56) References cited:
- EP-A1- 2 161 963
- EP-A1- 2 317 790
- WO-A1-2009/081268
- WO-A1-2010/016518
- WO-A1-2010/019364
- ERICSSON: "Simplified ISR solution for CS fallback", 3GPP DRAFT; S2-085627_CSFB ISR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Sophia; 20080819, 19 August 2008 (2008-08-19), XP050267652, [retrieved on 2008-08-19]
- 3GPP: "3rd Generation Partnership Project; technical specification Group Services and System Aspects; Circuit Switched (CS) fallback in Evolved Packet System (EPS); Stage 2 (Release 10)", 3GPP TS 23.272 V10.1.0, 29 September 2010 (2010-09-29), pages 1-78, XP002632439, Retrieved from the Internet: URL:http://www.3gpp.org/ftp/Specs/archive/ 23_series/23.272/ [retrieved on 2011-04-11]
- "3rd Generation Partnership Project; Technical Specification Group Core Network and Terminals; Mobility Management Entity (MME) â Visitor Location Register (VLR) SGs interface specification (Release 10)", 3GPP STANDARD; 3GPP TS 29.118, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 28 September 2010 (2010-09-28), pages 1-58, XP050442299, [retrieved on 2010-09-28]

## Description

### Technical field

This invention relates to the field of handling calls in an integrated telecommunication network in which at least circuit switched and packet switched calls are a possibility.

### Background

In the 3GPP CSFB (Circuit Switched FallBack) architecture 3GPP TS 23.272 v10.1.0 a user equipment, UE, may be reached for terminating (i.e. making or establishing) a circuit switched, CS, call via paging in the, packet switched, PS, domain.

The UE, registers in the Mobility Management Entity, MME, using the Combined EPS/IMSI attach, and the Mobile switching Centre, MSC, is updated for UE registration by the MME. The interface used between the MME and the MSC is the SGs interface. The function is used in case of lacking IMS voice support in the UE or in the NW, whereby LTE (Long Term Evolution - access) is used for packet switched, PS, service while the fallback to circuit switched, CS, service is used for voice.

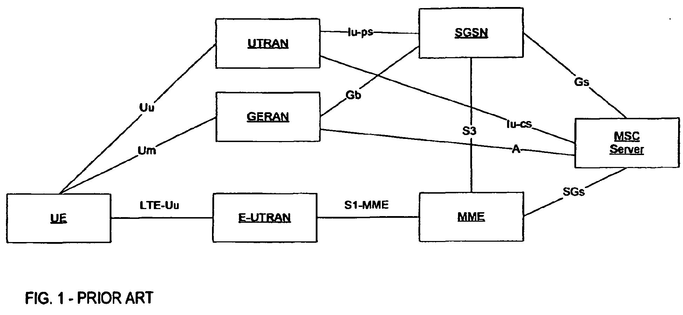

Fig. 1 shows a prior art non-roaming network architecture in which communication may be carried through various 3GPP access and network technologies. There is shown a GERAN (GSM EDGE Radio Access Network, -referred to as 2G) access interface (comprising a BSS (Base Station Subsystem (not shown)), a UTRAN (UMTS Terrestrial Access Network, -referred to as 3G,) interface (comprising a NodeB base station (not shown)) and a E-UTRAN (referred to as LTE (Long Term Evolution)) interface (comprising a eNodeB base station (not shown)).

Non-roaming architecture for 3GPP accesses.

The MME may be deployed in what is called a MME pool, which means that the several MMEs are able to serve the UE at attach. This is accomplished by the MMEs being configured such that more than one MME is serving a group of Traffic Areas (TAs). As long as the UE stays in the geographic area served by the MME pool no MME change will be necessary when the UE due to mobility. On the CS side the MSC may in turn also be configured in a pool configuration, which however is not relevant for this invention. The pool configuration provides for redundancy, load sharing and efficient signalling by potentially decreasing the number of inter-MME TAU/HO (Traffic Area Update/ Handover).

### Problems with existing solutions

The inventors of the present document has acknowledged that, the existing solutions for MT CS call is such that the CS Call is placed in the Mobile Switching Centre, MSC, and if the UE is registered via the SGs interface, i.e. an SGs association exists in the MSC, the MSC will issue a CS Page to the UE via the MME over SGs. The MME will in turn page the UE with a CS indicator and if successful, the UE will move to CS to receive the call. In case there is a paging problem, the UE is not reached by the page message. The MSC may or may not re-submit the page depending on if the MSC is informed, e.g. by a Paging Reject message from the MME. Eventually, the MSC will give up and the call is lost. The paging problem may arise for different reasons, such as: The MME has restarted; the transmission between the MME and the MSC is broken; or the MME has crashed and the SGs association is lost.

The paging problem is due to that when the UE is in IDLE state the UE may not be aware of network problems, not even if the MME crashes. Only when a periodic update timer in the UE indicates that a TAU is necessary, the UE will be made aware of such problems, and then re-attach. Until that happens, there will be a synchronization problem between the UE and the network. The UE will remain in the PS domain expecting to be reachable, while the MSC will not be able to reach the UE, resulting in dropped calls.

Prior art document EP 2 317 790 A1 published 2011-05-04 is believed to correspond to WO2010/016518A1 published on 2010-02-11. The latter document deals with the problem that when a failure occurs in an exchange in a system capable of performing CS fall back (Packet Switched to Circuit switched fall back) that have assigned the mobile station UE the TMSI or the P-TMSI the mobile station cannot receive an incoming signal unless the mobile station performs a location registration processing to another exchange (e.g. MME). In fig. 6 of this document a solution to the above problem is shown for a system comprising a pool of MME's to which a MSC is connected. The above document shows that an alternative MME in a pool is addressed once a failure in a link between the MSC and a given MME occurs. Thereby, the system allows a mobile station to receive an incoming signal even when a failure occurs in an exchange to which the mobile station has performed a location registration processing.
The above document is silent on how the addresses of the pool of MME's are brought to the attention to the MSC, but one could imagine that this manually configured.
This document forms the respective preambles of the independent claims.

Prior art document WO 2010/019364 A1 shows in fig. 1 a flow diagram of a method 100 for performing an attach procedure, which largely corresponds to the procedure shown in fig. 2 of the present document, that is, the attach procedure according to TS 23.272. WO 2010/019364 A1 shows in fig. 1, that MME 104 sends a Location Update Request message, such as a new Location Area Identity (LAI), IMSI, a single MME address, or Location Update Type, to the VLR 106 (step 116).

Prior art EP 2 161 963 A1 notes that in the prior art, after registering with a CN node (such as a MME) in a resource pool, when moving in the resource pool, the UE does not change the CN node. The principle is as follows: The core network node, which the UE registers to, allocates a TMSI or a P-TMSI to the UE, and the TMSI or PTMSI carries an NRI that represents the core network node. In this way, when the UE attempts to access, the UE sends an Initial Direct Transfer (DT) message to the RAN, where the message carries the TMSI or P-TMSI. The RAN node selects the previously registered core network node corresponding to the NRI in the received TMSI or P-TMSI. Therefore, the UE moves within the resource pool, while the core network node keeps unchanged. Nevertheless, when the UE moves out of the resource pool, the RAN node is unable to find the CN node with corresponding NRI, the RAN node reselects a new core network node, and the UE moves within the new resource.

Prior art EP 2 161 963 A1 suggests that a resource pool identifier (pool-ID) is set in a System Architecture Evolved-Temporary Mobile Subscriber Identity (SAE-TMSI) to speed up pre-processing of update for an access device and simplify network resource configuration performed by the operator.
According to an aspect of EP 2 161 963 A1, a method for receiving and transmitting information according to an SAE-TMSI is provided, which may include: sending, by a new MME, an identifier request or context request that carries an SAE-TMSI to an old MME in an attaching process, if the SAE-TMSI is unique in the MME, where the request carries no old Track Area Identifier (TAI); or sending, by a new MME, a request for obtaining UE context to an old MME in a location update process of the MME, where the request carries the SAE-TMSI but carries no old location identifier; and resolving, by the MME, the SAE-TMSI in the request to obtain an address of the old MME, if the MME that receives the request is not the old MME of the UE.
FIG. 8 of EP 2 161 963 A1 is a flowchart of reallocating an SAE-TMSI wherein a timer may be set in the network. The SAE-TMSI is reallocated upon timeout of the timer. If the UE is idle at timeout of the timer, the SAE-TMSI may be allocated at the time of the UE accessing the network, or of the network paging the UE.
This document is silent on how to configure more addresses of MME's in a pool.

### References

3GPP TS 23.401 V10.1.0 General Packet Radio Service (GPRS) enhancements for Evolved Universal Terrestrial Radio Access Network;
3GPP TR 23.272 V10.1.0 Circuit Switched (CS) fallback in Evolved Packet System (EPS); Stage 2;
3GPP TS 29.118 V10.1.0 Mobility Management Entity (MME) - Visitor Location Register (VLR); SGs interface specification;
3GPP TS 29.303 Domain Name System Procedures;
GPP TS 23.003 Numbering, addressing and identification.

### Summary of the invention

The object of the present invention is to avoid some or all the disadvantages mentioned above.

This object has been solved by the subject matter defined in claims 1, 9, 11 and 14.

According to a further aspect of the invention there is provided a method, wherein, the switching unit starts a timer and wherein the detection of the not ready state involves not receiving a service request signal from the selected MME before the timer expires.

The detection of the not ready state may involve receiving a signal indicative of a failure from the selected MME.

According to a further aspect, it is examined whether a reset message from a MME is received, and if so subsequently determining the MME to be in a not ready state.

According to a further aspect, an initial list (A1) is stored in the switching unit concerning alternative MME's to select upon a serving MME being in a state of not ready.

According to a further aspect the initial list in the switching unit is updated when a MME makes an attach or location update.

An advantage with the invention is that allows the switching unit to reach a UE that is in IDLE and is in a state of combined EPS/IMSI attached to the switching unit. The key point is to let the switching unit be aware of and to use the fact that the MMEs are configured in an MME pool. Since all the MMEs in the MME pool may cover the same geographical area, the UE may be reachable for paging from each of the MMEs in the MME pool, not only from the one it is registered to.

According to an aspect of the invention, if the switching unit discovers that the UE is not reachable via the registered MME, the switching unit will select a different MME belonging to the same MME pool and submit the CS page for the UE via that alternative MME. The switching unit may comprise the IMSI and / or may comprise LA information in the page message such that efficient paging can be done in the alternative selected MME, which otherwise would require global paging. When the page sent from the alternative MME reaches the UE, the UE proceeds according to the CSFB MT procedure such that the call can be continued in the CS domain. The UE may perform PS procedures independently, e.g. the UE may perform a Routing Area Update towards a 3G SGSN which will fail and forcing the UE to re-attach or the UE may send "Suspend" to the SGSN in 2G if DTM (Dual Transfer Mode) mode is not supported in 2G.

### Brief description of the drawings

- Fig. 1: shows a prior art network architecture,
- fig. 2: shows a prior art attach procedure,
- fig. 3: shows a prior art traffic area / location area update procedure,
- fig. 4: shows a switching unit according to the invention and surrounding GERAN units,
- fig. 5: shows a MME according to the invention,
- fig. 6: shows a first and second embodiment of a method for a switching unit according to the invention,
- fig. 7: shows a signalling diagram relating to the first embodiment of the invention,
- fig. 7a: shows another signalling diagram according to the first embodiment,
- fig. 8: shows a further embodiment of a method for a switching unit and a MME according to the invention,
- fig. 9: shows a further embodiment of a method for a switching unit and a MME according to the invention, and
- fig. 10: and 11 shows lists for selecting alternative MME's according a given priority order.

### Detailed description

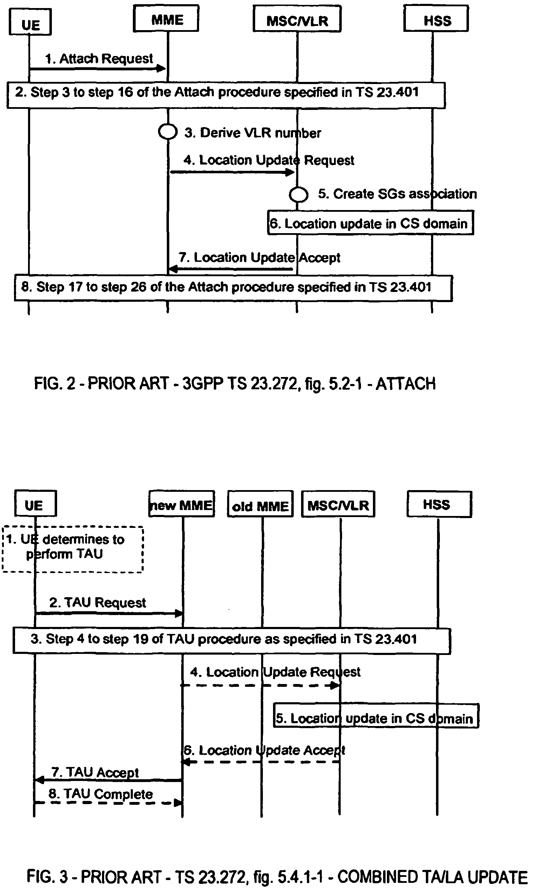

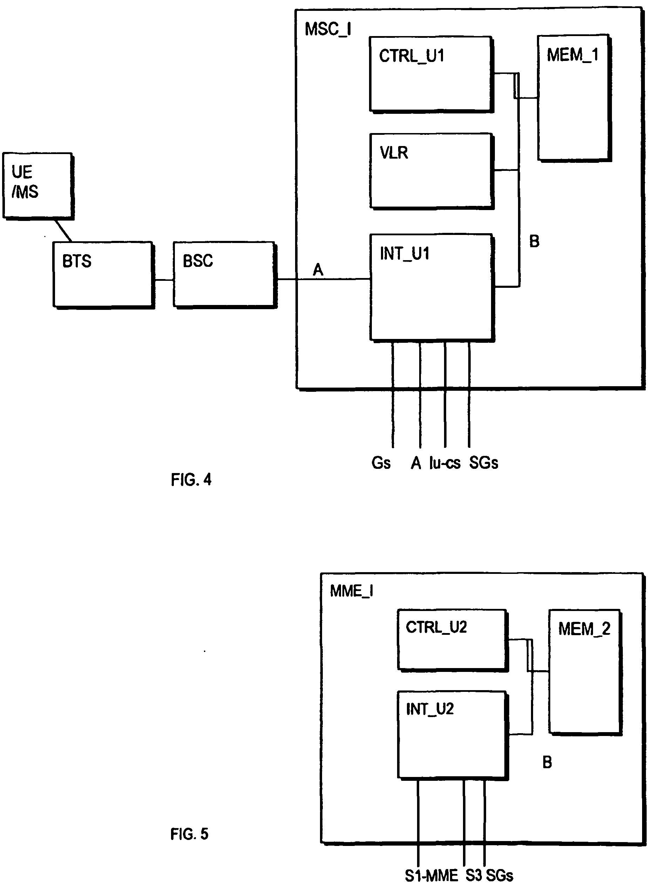

The present invention relates among others to a switching unit such as a mobile switching centre (MSC) or a combined mobile switching centre / VLR server, denoted MSC_I. As shown in fig. 4, the switching unit according to the invention comprises a control unit, CTRL_U1, and an interface unit, INT_U1 and possibly a visitor's location register, VLR. The interface unit comprises interfaces Gs to SGSN, lu-cs to UTRAN, SGs to MME and A to GERAN, whose primary nodes are illustrated in fig. 2, namely the base station centre, BSC, and the base station transmission set, BTS. The functionalities described in the following are carried out by the control unit, CTRL_U1.

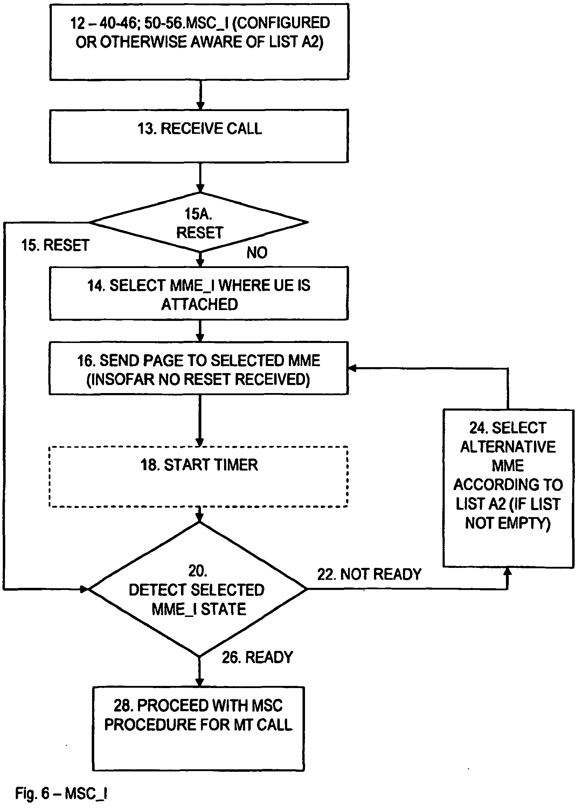

In fig. 4, a first embodiment of a unit switching unit MSC_I according to the invention and surrounding GERAN units, a base station controller (BSC) and a base transceiver set (BTS) is shown coupling to a mobile station UE/ MS over the air interface. The switching unit, MSC_I, performs the role as a mobile switching centre. It may comprise VLR (Visitor Location Register) functionality and the switching unit may consequently be referred to as a mobile switching centre / VLR server. The switching unit, comprises moreover a control unit, CTRL_U1 which again may comprise one or more processors, a memory MEM_1 and an interface unit INT-U1 providing a Gs; A; lu-cs; and a SGs interfaces as shown in fig. 1. There is also provided an internal bus, B. The switching unit is adapted to carry out a routine shown in fig. 6, which may be implemented as a software program and stored in memory MEM_1 and executed by control unit CTRL_U1.

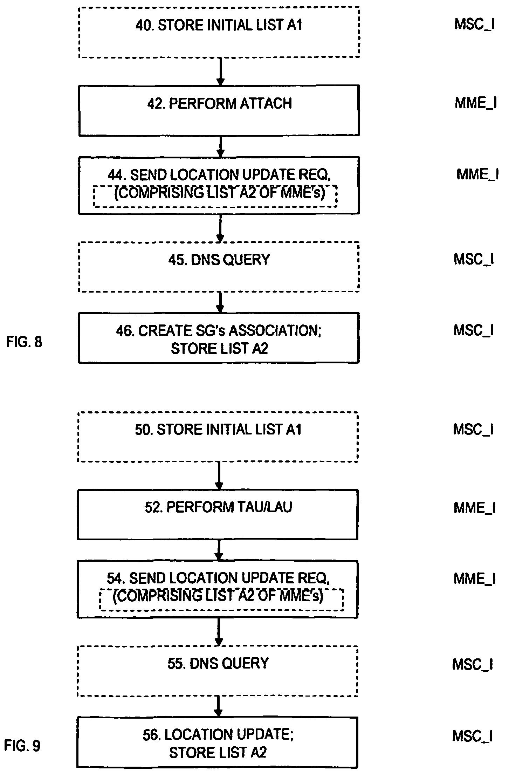

In fig. 5, a MME, MME_I, according to the invention is shown, comprising a control unit, CTRL_U2, comprising one or more processors, a memory MEM_2 and an interface unit INT_U2 providing a S1-MME; a S3; and a SGs interface. An internal bus B is also provided. The MME is adapted to carry out a routine shown in figs. 8 and 9, which may be implemented as a software program and stored in memory MEM_2 and executed by control unit CTRL_U2.

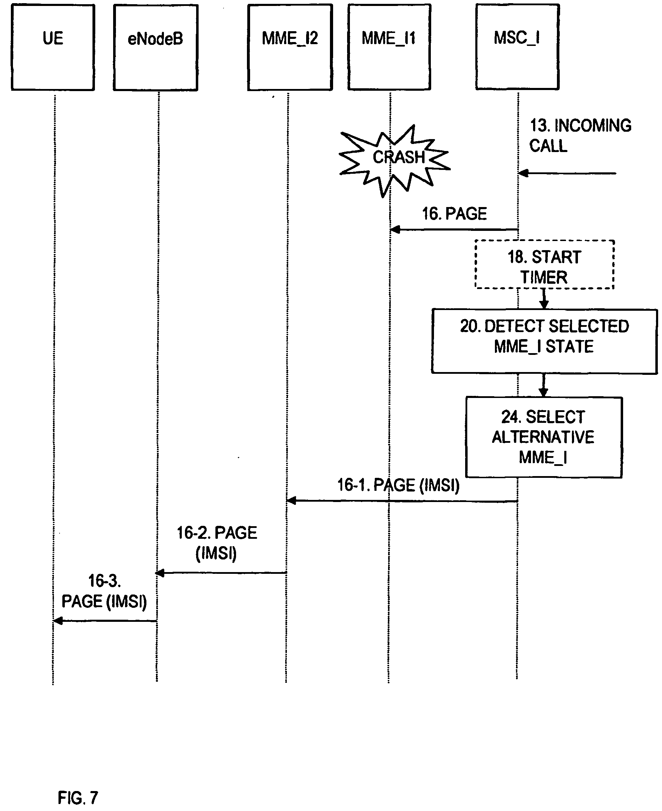

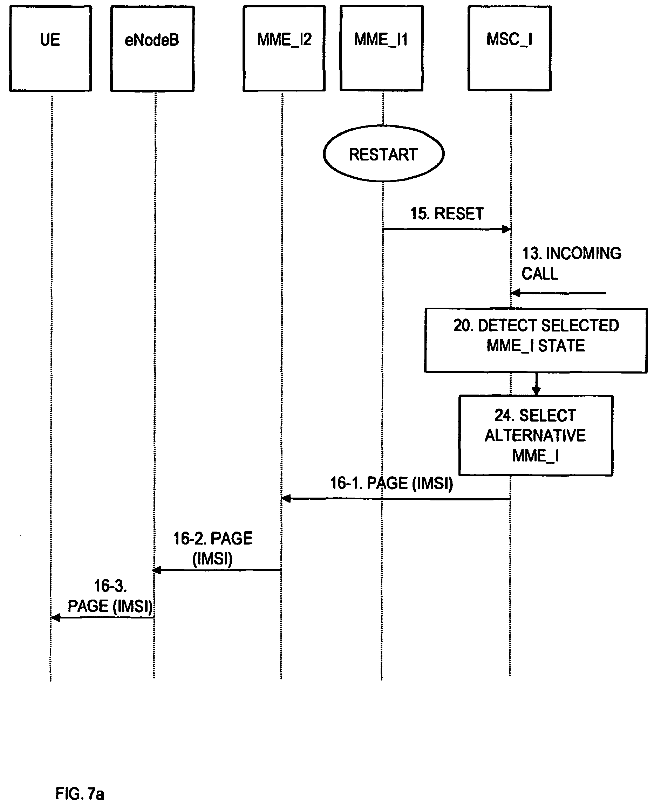

In **fig. 6****,** a first embodiment of a method for a switching unit according to the invention is shown. Reference will also be made to **fig. 7****,** showing a signalling diagram relating to the first embodiment of the invention.

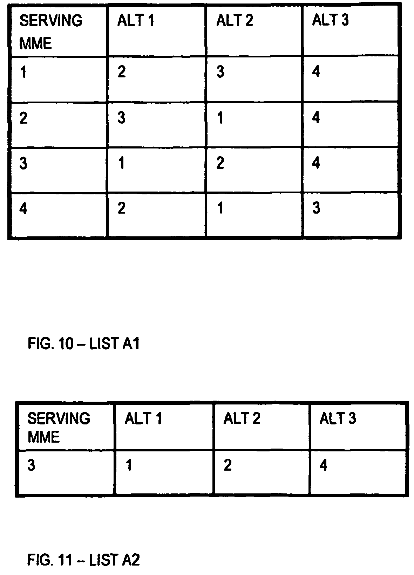

In step 12, fig. 6, the switching unit is made aware of a list A2 of at least one alternative MME of a MME pool. The list A2 could for instance have the form as shown in fig. 11.

According to the invention, more options exist for carrying out this step and the list may moreover be updated over time. Various embodiments are shown in figs. 8 and 9, which will be dealt with further below.

In step 13, the switching unit MSC_I receives a mobile terminated (MT) CS voice call from an external network.

In step 15A, it is examined whether a reset signal is received. If no, move to step 14, if yes, move to step 20.

In step 14, the switching unit selects the MME to which the UE - receiving the call - is currently attached (MME_I1). This is the serving MME.

Subsequently, a page message is transmitted to the selected MME (e.g. MME_I), step 16.

As an option shown in fig. 7, a timer, set to expire at a given count, may start, step 18.

In step 20, the method investigates the state of the selected MME, for instance a unit MME_I as depicted in fig. 5, but also a standard known MME unit. It is detected whether the selected MME is ready 26 or not 22. The detection could be based on the absence of a reply from the selected MME before expiry of the timer set under step 18. Alternatively, the selected MME in question could have signalled specific signals concerning a fail state or restart indicating the selected MME to be not ready.

Following the not ready detection 22, the switching unit selects in step 24 a new alternative MME according to the list A2 stored in the switching unit. Consequently, a page message is transmitted to the new selected MME (MME_I2) in step 16, whereupon the timer is set anew, 18.

Whenever, it is detected in step 20 that the selected MME is ready, 26, the method proceeds with known MSC procedures for the call, step 28.

The scenario could be as depicted in fig. 7, where for the incoming CS call 13, a malfunctioning appears in MME_I1 to which the called UE is presently attached. A first page message 16 is sent to the malfunctioning MME from which no reply is received.

Steps 18, 20 and 24 are executed and a new page message, denoted 16-1, including the IMSI of the called UE is indicated, and transmitted to the alternative MME, in this case MME_I2, selected under step 24.

This time, a ready MME is found and the page message is forwarded 16-2 to an eNodeB and further 16-3 to the UE. Consequently, the CS call can be terminated and answered by the UE.

In **fig. 7a****,** another signalling diagram according to the invention is shown. In this case, MME_I1 is restarted and transmits a reset signal 15 to the switching unit. When an incoming call 13 is received, the switching unit after test 15A acknowledging the reset signal detects 20 the selected MME as not ready due to the reset signal. Subsequently, the switching unit consults the list A2 and finds that MME_I2 is to be used as a next attempt, and the procedure follows as in fig. 7.

In **fig. 6****,** the step of detecting the state of the serving MME 20 may be carried out according to the invention in various manners:
• A. When the MME has restarted and all records of the UE are lost in the MME. The switching unit may or may not be aware of the MME restart; depending on if a reset message has been sent or not.
If a reset is not sent when the MME receives a page, depending on the implementation, the MME may page the UE as shown in fig. 7 if the IMSI and LAI are included or may reject the page by sending a reject message to the switching unit. If a reject message, or a signal indicative of a failure in the MME, issued from the selected MME (Not shown) or no reply is received in the switching unit - as shown in fig. 7 - the switching unit detects in step 24 a paging problem and detects the MME to be not ready 22. Hence, the reception of a reject message is an alternative - or an addition - to the timer based detection.
• B. The detection may also be based on a finding that the transmission between the MME and the switching unit is broken, e.g. a cable has been cut. The protocol stack for the SGs interface is using SIGTRAN, shown in table 2:

**Table 2**

| |
|---|
| SGsApp |
| TCAP |
| SCCP |
| M3UA |
| SCTP |
| IP |

In this case, the SGs association is lost. This may be detected in the switching unit by SCCP monitoring in step 20. When the transmission loss is detected, an alternative MME is selected 24 for all UEs associated over this interface and an MME using a different SGs interface, but still in the same MME pool.
- C. The MME has crashed and the SGs association is lost. When the transmission is lost, the switching unit may send a page message to the first MME and get an indication back from the transmission protocol that the peer is unavailable (Not shown). The switching unit determines in step 20 the MME to be not ready. The condition may be short but also prevailing for several hours or more.

As mentioned above, the way the switching unit is made aware of the list of at least one alternative MME can be accomplished in various ways according to the invention, as illustrated in **figs. 8 and 9****.**

The selection should preferably involve selecting a MME in the same MME pool to which a MME the called UE is attached, or to a group of MME's being available to the switching unit, being replaceable with one another and covering substantially the same geographical area. In this document, reference will be made to such a group of replaceable MME's as a pool of MME's. According to the invention, three further embodiments are provided for seletecting the MME in step 16 for the first time and establishing the list of at least an alternative MME, 16-1:
I. by using a DNS query in the switching unit;
II. by using a default MME configured in the switching unit based on some additional criteria, e.g. LAI, UE IMSI (number series) etc.;
III. by using the MME who has been recorded in the switching unit (e.g. it was included in the SGs association establishment from the MME.).

These further methods make use of at least some of the method steps undertaken in connection with attach and / or location update.

The methods for the switching unit according to the invention and the MME according to the invention for attach **fig. 8** and location update **fig 9****.** comprise the following steps, whereby some steps are optional:
In **fig. 8****,** in step 40 an initial list A1, e.g. a list as shown in fig. 10, may be stored in the switching unit. In some further embodiments, the list A1 may not be provided initially.

In step 42 - e.g. following in any time span after step 40 - the MME performs attach and in step 44, transmits a location update request. According to one further embodiment of the invention, the location update may comprise a list - as A2 shown in fig. 11, of at least one alternative MME to the MSC. The list A2 may be configured as an excerpt of the list A1 containing a sequence of alternatives for the serving MME in question.

If no list is comprised in the location update request, a DNS query may be carried out, 45.

Subsequently, the switching unit MSC_I creates 46 the SGs association as in the prior art, **fig. 2****,** but moreover stores the list A2 in the switching unit.

In **fig. 9****,** in step 52 - e.g. following in any time span after step 50 - the MME performs TAU (Traffic Area Update)/LAU (Location Area Update) update and transmits a location update request comprising the list of at least one alternative MME to the MSC. Subsequently, the switching unit MSC_I creates 56 the SGs association as in the prior art, **fig. 3****,** but moreover stores the list in the switching unit.

It is seen that the invention provides a detection of the paging problem and provides various ways for solving this problem, which may occur under the following circumstances:
In fig. 9, the procedure is shown for traffic area update/ location area update, which is similar to the fig. 8 procedure. As appears 52 differs from 42 in that a traffic area update / location update is performed by the MME. Moreover, in 56 a location update is done in the switching unit. Otherwise step 50 corresponds to step 40, 54 corresponds to 44, 55 corresponds to 45. Since the TAU/LAU procedure resembles the attach procedure, the latter will only be explained.

### I. DNS query

The first further embodiment enabling the MME selection, involves that the switching unit MSC_I uses information, e.g. LAI (Location Area Identity), to construct a DNS (Domain Name Server) string for a DNS query. The LAI is first available in the switching unit after the attach, step 42. The syntax of a DNS string in EPC (Evolved Packet Core) is specified according to TS 29.303. According to the invention, the Domain Name Service resolves a DNS string into a list of possible MME addresses in the Pool which may serve the UE and the switching unit can select a MME from this list. Consequently, the switching unit can page the UE in that new MME including the LAI in the IMSI page 16-1 as illustrated in figs 7 and 7a. Such a step of DNS query resolution could be undertaken in steps 45 in fig. 8. Hence, in fig. 8, steps 42, 44 (without list A2), 45 and 46 are performed.

### II. Default MME configured

The second further embodiment requires configuration in the switching unit of a list A1 of MMEs in the pool or a default MME associated with a pool. In the Location Update message 44 undertaken as illustrated in fig. 8, the switching unit will receive the 'MME name' of the MME serving the UE currently. The switching unit can from this information resolve the list A2 pertaining to the serving MME, and the list A2 need not be provided in the location update request message 44. Hence, in fig. 8 steps 40 (List A1), 42, 44 (without list A2) and 46 are performed.

### III. Alternative MME signalling

The third further embodiment of MME selection according to the invention makes use of a modification of the known SGs association message according to TS 29.118 from the MME to the switching unit, in such a way that the MME indicates one or more alternative MME addresses at attach or location update (TAU/LAU), as shown in figs. 8 and 9. According to this further embodiment, the Location Update Request message "4" known form the prior art and shown in figs. 2 and 3 above, is changed and a new optional IE (Information Element) for the list of at last an alternative MME is added.

The modified SGsAP-LOCATION-UPDATE-REQUEST 4 message from the MME to the switching unit may be arranged according to the invention as shown in table 1 below:

**Table 1**

| **Information element** | **Type/Reference** | **Presence** | **Format** | **Length** |
|---|---|---|---|---|
| Message type | Message type 9.2 | M | V | 1 |
| IMSI | IMSI 9.4.6 | M | TLV | 6-10 |
| MME name | MME name 9.4.13 | M | TLV | 57 |
| Alternative MME name | MME name 9.4.13 | O | TLV | 57 |
| EPS location update type | EPS location update type 9.4.2 | M | TLV | 3 |
| New location area identifier | Location area identifier 9.4.11 | M | TLV | 7 |
| Old location area identifier | Location area identifier 9.4.11 | O | TLV | 7 |
| TMSI status | TMSI status 9.4.21 | O | TLV | 3 |
| IMEISV | IMEISV 9.4.5 | O | TLV | 10 |

The Alternative MME name contains the name in the form of a fully qualified domain name (FQDN) as specified in TS 23.003. The underlined fields constitute the modified information element according to the invention.

According to TS 23.272 sect 5.2:
"4) The MME sends a Location Update Request (new LAI, IMSI, MME name, Location Update Type) message to the VLR. MME name is a FQDN string."

In 3GPP TS 29.118, the SGs stage 3 spec, the message is described in detail: SGsAP-LOCATION-UPDATE-REQUEST message shown in table 1:
As known in the prior art, in order to enable the MSC to page the UE for MT CS Call when the UE is camping in LTE, the MME creates an SGs association to the MSC. The MME will update the UE location through sending a Location update to the MSC.

The MME name contains the name in the form of a fully qualified domain name (FQDN) as specified in 3GPP TS 23.003.

The MME (MME_I) according to the invention will select an alternative MME and provide the identity of the selected MME the MSC. The "subsequently selected" MME shall page a UE for which it has no contexts, based on the information received from the MSC. This constitutes the normal MME behaviour; hence the invention requires no changes to the "subsequently selected" MME. Hence, it is possible that the invention may be implemented in a mixed MME pool comprising a restricted number of MME's according to the invention and prior art MME's. It is however noted that the redundancy effect s would be more effective if all MME's were constituted according to the embodiments of invention.

Hence, step 40 is optionally carried out, step 42, 44 (With list A2) and step 46 possibly reconfiguring the list A1 if provided - are performed.

### Abbreviations

- PCC: Policy and Charging Control
- PCEF: Policy and Charging Enforcement Function
- PCRF: Policy and Charging Rules Function
- BBERF: Bearer Binding and Event Reporting Function
- IP CAN: IP Connectivity Access Network
- SGSN: Serving GPRS Support Node
- GGSN: Gateway GPRS Support Node
- UE: User Equipment
- UMTS: Universal Mobile Telecommunications System
- E-UTRAN: Evolved UTRAN
- UTRAN: Universal Terrestrial Radio Access Network
- GBR: Guaranteed Bit Rate
- EPS: Evolved Packet System
- EPC: Evolved Packet Core
- eNB: Evolved Node B
- PDN: Packet Data Network
- PDN-GW: PDN Gateway
- BSS: Base Station Subsystem
- PDP: Packet Data Protocol
- MME: Mobility Management Entity
- QoS: Quality of Service
- IE: Information Element

## Claims

1. A method for a switching unit (MSC_I) in a network in which a user equipment (UE) is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's, that is, a group of MME's being replaceable with one another and covering substantially the same geographical area, the user equipment (UE) being adapted to receiving page signals (18) so as to inform the user of incoming calls,
the switching unit (MSC_I) being adapted for issuing page signals (16-1; 16-2; 16-3) to MME nodes,
- receiving (13) an incoming external CS call;
- performing detection (20) of a first selected MME, as to whether the first selected MME is ready or not;
- if detecting a not ready state (22) concerning the selected MME (MME_I1), selecting (24) an alternative MME and issuing a page message (16; 16-1) to the alternative MME (MME_I2) (16-1) belonging to the same pool of MME's as the first MME,
wherein the selection (24) of the alternative MME is performed according to a predetermined list of at least one alternative MME stored in the switching unit (MSC) **characterized in** prior to the detection of a not ready state,
- the predetermined list is indicated in or resolved from a location update request message (44, 54) from a MME under an attach procedure or traffic update / location update procedure;
or
- the predetermined list is established (A2) by the switching unit issuing (45, 55) a Domain Name Service, DNS, query to a DNS server, wherein the DNS server resolves a DNS string into a list of possible MME addresses.

2. Method according to claim 1, wherein the alternative MME name or the predetermined list of at least one MME is in the form of a fully qualified domain name.

3. Method according to claim 1, wherein the location update request message is a SGsAP location update request message.

4. Method according to any of claims 1 - 3, wherein, the switching unit starts (18) a timer and wherein the detection (22) of the not ready state involves not receiving a service request signal from the selected MME before the timer expires.

5. Method according to any of claims 1 - 4, wherein the detection (22) of the not ready state involves receiving a signal indicative of a failure from the selected MME.

6. Method according to any previous claim, wherein it is examined (15A) whether a reset message (15) from a MME is received, and if so subsequently determining (20) the MME to be in a not ready state.

7. Method according to any claims 1 - 6, wherein an initial list (A1) is stored in the switching unit concerning alternative MME's to select upon a serving MME being in a state of not ready.

8. Method according to claim 7, wherein the initial list in the switching unit is updated when a MME makes an attach (42) or location (52) update.

9. Method for a mobility management entity, MME, adapted for sending a location update request to a switching unit (MSC/VLR), wherein the MME provides a predetermined list of at least one alternative MME within a pool of MME's in a location update request message (44, 54), **characterized in that** the MME providing
- a predetermined list being indicated in or being resolvable from the location update request message (44, 54) from the MME, the message being transmitted under an attach procedure or traffic update / location update procedure,
wherein the selection (24) of an alternative MME can be performed according to a predetermined list of at least one alternative MME stored in the switching unit (MSC) to which the message is transmitted.

10. Method according to claim 9, wherein the alternative MME name or the predetermined list of at least one MME is in the form of a fully qualified domain name.

11. Switching unit (MSC_I) in a network in which a user equipment (UE) is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's, that is, a group of MME's being replaceable with one another and covering substantially the same geographical area,
the user equipment (UE) being adapted to receiving page signals (18) so as to inform the user of incoming calls,
the switching unit (MSC_I) comprising a control unit (CTRL_U1), a memory (MEM_1) and an interface unit (INT-U1) and an internal bus (B), the switching unit being adapted for issuing page signals (16-1; 16-2; 16-3) to MME nodes,
for receiving (13) an incoming external CS call;
for performing detection (20) of a first selected MME, as to whether the first selected MME is ready or not;
the switching unit (MSC_I) further being adapted for - if detecting a not ready state (22) concerning the selected MME (MME_I1), selecting (24) an alternative MME and issuing a page message (16; 16-1) to the alternative MME (MME_I2) (16-1) belonging to the same pool of MME's as the first MME,
wherein the selection (24) of the alternative MME is performed according to a predetermined list of at least one alternative MME stored in the switching unit (MSC)
**characterized in**
prior to the detection of a not ready state
the predetermined list is indicated in or resolved from a location update request message (44, 54) from a MME under an attach procedure or traffic update / location update procedure;
or
the predetermined list is established (A2) by the switching unit issuing (45, 55) a Domain Name Service, DNS, query to a DNS server, wherein the DNS server resolves a DNS string into a list of possible MME addresses.

12. Switching unit according to claim 11 wherein the alternative MME name or the predetermined list of at least one MME is in the form of a fully qualified domain name.

13. Switching unit according to claim 12, wherein the location update request message is a SGsAP location update request message.

14. Mobility management entity, MME, (MME_I), comprising a control unit, (CTRL_U2), a memory (MEM_2) and an interface unit (INT_U2), an internal bus (B), the MME being adapted for sending a location update request to a switching unit (MSC/VLR), wherein the MME provides
- a predetermined list being indicated in or being resolvable from the location update request message (44, 54) from the MME, the message being transmitted under an attach procedure or traffic update / location update procedure,
wherein the selection (24) of an alternative MME can be performed according to a predetermined list of at least one alternative MME stored in the switching unit (MSC) to which the message is transmitted.

15. Mobility management entity, MME, (MME_I), according to claim 14, wherein the location update request message is a SGsAP location update request message.

16. Mobility management entity according to claim 14 or 15 wherein the alternative MME name or the predetermined list of at least one MME is in the form of a fully qualified domain name.

## Patentansprüche

1. Verfahren für eine Vermittlungseinheit (MSC_I) in einem Netz, in welchem eine Benutzereinrichtung (UE) so ausgelegt ist, dass sie an ein 2G/3G-Netz zum Durchführen von leitungsvermittelter, CS, Kommunikation mit dem Netz angeschaltet und damit verbunden wird, oder so ausgelegt ist, dass sie an ein LTE-Netz zum Durchführen von paketvermittelter, PS, Kommunikation angeschaltet wird, wobei die PS-Kommunikation so ausgelegt ist, dass sie über eine Mobilitätsverwaltungsinstanz, MME, durchgeführt wird, die in einem Pool von MMEs, das heißt einer Gruppe von MMEs, die untereinander austauschbar sind und im Wesentlichen das gleiche geografische Gebiet versorgen, angeordnet sein kann, wobei die Benutzereinrichtung (UE) so ausgelegt ist, dass sie Funkrufsignale (18) empfängt, um den Benutzer über eingehende Anrufe zu informieren,
wobei die Vermittlungseinheit (MSC_I) ausgelegt ist zum Ausgeben von Funkrufsignalen (16-1; 16-2; 16-3) an MME-Knoten,
- Empfangen (13) eines eingehenden externen CS-Anrufs;
- Durchführen von Erkennung (20) einer ersten ausgewählten MME im Hinblick darauf, ob die erste ausgewählte MME bereit ist oder nicht;
- Auswählen (24) bei Erkennen eines Nicht-bereit-Zustands (22) bezüglich der ausgewählten MME (MME_I1) einer alternativen MME und Ausgeben einer Funkrufnachricht (16; 16-1) an die alternative MME (MME_I2) (16-1), die zum gleichen Pool von MMEs wie die erste MME gehört,
wobei die Auswahl (24) der alternativen MME gemäß einer vorbestimmten Liste mindestens einer alternativen MME durchgeführt wird, die in der Vermittlungseinheit (MSC) gespeichert ist,
**dadurch gekennzeichnet, dass** vor der Erkennung eines Nicht-bereit-Zustands
- die vorbestimmte Liste angegeben wird in oder aufgelöst wird aus einer Aufenthaltsaktualisierungs-Anforderungsnachricht (44, 54) von einer MME gemäß einer Anschaltprozedur oder Verkehrsaktualisierungs-/Aufenthaltsaktualisierungsprozedur;
oder
- die vorbestimmte Liste dadurch erstellt wird (A2), dass die Vermittlungseinheit eine Domänennamendienst, DNS,-Anfrage an einen DNS-Server ausgibt (45, 55), wobei der DNS-Server eine DNS-Zeichenkette in eine Liste von möglichen MME-Adressen auflöst.

2. Verfahren nach Anspruch 1, wobei der Name der alternativen MME oder die vorbestimmte Liste mindestens einer MME in der Form eines vollständigen Domänennamens ist.

3. Verfahren nach Anspruch 1, wobei die Aufenthaltsaktualisierungs-Anforderungsnachricht eine SGsAP-Aufenthaltsaktualisierungs-Anforderungsnachricht ist.

4. Verfahren nach einem der Ansprüche 1 bis 3, wobei die Vermittlungseinheit einen Zeitgeber startet (18), und wobei die Erkennung (22) des Nicht-bereit-Zustands ein Nicht-Empfangen eines Dienstanforderungssignals von der ausgewählten MME vor dem Ablauf des Zeitgebers umfasst.

5. Verfahren nach einem der Ansprüche 1 bis 4, wobei die Erkennung (22) des Nicht-bereit-Zustands ein Empfangen eines Signals von der ausgewählten MME umfasst, das einen Fehler anzeigt.

6. Verfahren nach einem der vorhergehenden Ansprüche, wobei überprüft wird (15A), ob eine Rücksetznachricht (15) von einer MME empfangen wird, und, wenn dies zutrifft, anschließend bestimmt wird (20), dass die MME in einem Nicht-bereit-Zustand ist.

7. Verfahren nach einem der Ansprüche 1 bis 6, wobei eine anfängliche Liste (A1) bezüglich des Auswählens von alternativen MMEs, wenn eine versorgende MME in einem Nicht-bereit-Zustand ist, in der Vermittlungseinheit gespeichert wird.

8. Verfahren nach Anspruch 7, wobei die anfängliche Liste in der Vermittlungseinheit aktualisiert wird, wenn eine MME eine Anschaltung (42) oder eine Aufenthaltsaktualisierung (52) durchführt.

9. Verfahren für eine Mobilitätsverwaltungsinstanz, MME, die zum Senden einer Aufenthaltsaktualisierungsanforderung an eine Vermittlungseinheit (MSC/VLR) ausgelegt ist, wobei die MME eine vorbestimmte Liste mindestens einer alternativen MME innerhalb eines Pools von MMEs in einer Aufenthaltsaktualisierungs-Anforderungsnachricht (44, 54) bereitstellt, **dadurch gekennzeichnet, dass** die MME Folgendes bereitstellt:
- eine vorbestimmte Liste, die angegeben wird in oder aufgelöst werden kann aus der Aufenthaltsaktualisierungs-Anforderungsnachricht (44, 54) von der MME, wobei die Nachricht gemäß einer Anschaltprozedur oder Verkehrsaktualisierungs-/Aufenthaltsaktualisierungsprozedur gesendet wird,
wobei die Auswahl (24) einer alternativen MME gemäß einer vorbestimmten Liste mindestens einer alternativen MME durchgeführt werden kann, die in der Vermittlungseinheit (MSC) gespeichert ist, an welche die Nachricht gesendet wird.

10. Verfahren nach Anspruch 9, wobei der Name der alternativen MME oder die vorbestimmte Liste mindestens einer MME in der Form eines vollständigen Domänennamens ist.

11. Vermittlungseinheit (MSC_I) in einem Netz, in welchem eine Benutzereinrichtung (UE) so ausgelegt ist, dass sie an ein 2G/3G-Netz zum Durchführen von leitungsvermittelter, CS, Kommunikation mit dem Netz angeschaltet und damit verbunden wird, oder so ausgelegt ist, dass sie an ein LTE-Netz zum Durchführen von paketvermittelter, PS, Kommunikation angeschaltet wird, wobei die PS-Kommunikation so ausgelegt ist, dass sie über eine Mobilitätsverwaltungsinstanz, MME, durchgeführt wird, die in einem Pool von MMEs, das heißt einer Gruppe von MMEs, die untereinander austauschbar sind und im Wesentlichen das gleiche geografische Gebiet versorgen, angeordnet sein kann,
die Benutzereinrichtung (UE) so ausgelegt ist, dass sie Funkrufsignale (18) empfängt, um den Benutzer über eingehende Anrufe zu informieren,
die Vermittlungseinheit (MSC_I) eine Steuereinheit (CTRL_U1), einen Speicher (MEM_1) und eine Schnittstelleneinheit (INT-U1) und einen internen Bus (B) umfasst, die Vermittlungseinheit ausgelegt ist zum Ausgeben von Funkrufsignalen (16-1; 16-2; 16-3) an MME-Knoten,
zum Empfangen (13) eines eingehenden externen CS-Anrufs;
zum Durchführen von Erkennung (20) einer ersten ausgewählten MME im Hinblick darauf, ob die erste ausgewählte MME bereit ist oder nicht;
die Vermittlungseinheit (MSC_I) ferner so ausgelegt ist, dass sie bei Erkennen eines Nicht-bereit-Zustands (22) bezüglich der ausgewählten MME (MME_I1) eine alternative MME auswählt (24) und eine Funkrufnachricht (16; 16-1) an die alternative MME (MME_I2) (16-1) ausgibt, die zum gleichen Pool von MMEs wie die erste MME gehört,
wobei die Auswahl (24) der alternativen MME gemäß einer vorbestimmten Liste mindestens einer alternativen MME durchgeführt wird, die in der Vermittlungseinheit (MSC) gespeichert ist,
**dadurch gekennzeichnet, dass** vor der Erkennung eines Nicht-bereit-Zustands
die vorbestimmte Liste angegeben wird in oder aufgelöst wird aus einer Aufenthaltsaktualisierungs-Anforderungsnachricht (44, 54) von einer MME gemäß einer Anschaltprozedur oder Verkehrsaktualisierungs-/Aufenthaltsaktualisierungsprozedur;
oder
die vorbestimmte Liste dadurch erstellt wird (A2), dass die Vermittlungseinheit eine Domänennamendienst, DNS,-Anfrage an einen DNS-Server ausgibt (45, 55), wobei der DNS-Server eine DNS-Zeichenkette in eine Liste von möglichen MME-Adressen auflöst.

12. Vermittlungseinheit nach Anspruch 11, wobei der Name der alternativen MME oder die vorbestimmte Liste mindestens einer MME in der Form eines vollständigen Domänennamens ist.

13. Vermittlungseinheit nach Anspruch 12, wobei die Aufenthaltsaktualisierungs-Anforderungsnachricht eine SGsAP-Aufenthaltsaktualisierungs-Anforderungsnachricht ist.

14. Mobilitätsverwaltungsinstanz, MME, (MME_I), die eine Steuereinheit, (CTRL_U2), einen Speicher (MEM_2) und eine Schnittstelleneinheit (INT_U2) und einen internen Bus (B) umfasst, wobei die MME zum Senden einer Aufenthaltsaktualisierungsnachricht an eine Vermittlungseinheit (MSC/VLR) ausgelegt ist, wobei die MME Folgendes bereitstellt:
- eine vorbestimmte Liste, die angegeben wird in oder aufgelöst werden kann aus der Aufenthaltsaktualisierungs-Anforderungsnachricht (44, 54) von der MME, wobei die Nachricht gemäß einer Anschaltprozedur oder Verkehrsaktualisierungs-/Aufenthaltsaktualisierungsprozedur gesendet wird,
wobei die Auswahl (24) einer alternativen MME gemäß einer vorbestimmten Liste mindestens einer alternativen MME durchgeführt werden kann, die in der Vermittlungseinheit (MSC) gespeichert ist, an welche die Nachricht gesendet wird.

15. Mobilitätsverwaltungsinstanz, MME, (MME_I), nach Anspruch 14, wobei die Aufenthaltsaktualisierungs-Anforderungsnachricht eine SGsAP-Aufenthaltsaktualisierungs-Anforderungsnachricht ist.

16. Mobilitätsverwaltungsinstanz nach Anspruch 14 oder 15, wobei der Name der alternativen MME oder die vorbestimmte Liste mindestens einer MME in der Form eines vollständigen Domänennamens ist.

## Revendications

1. Procédé pour une unité de commutation (MSC_I) dans un réseau dans lequel un équipement utilisateur (UE) est apte à être rattaché et relié à un réseau 2G/3G pour effectuer une communication à commutation de circuits, CS, avec le réseau, ou est apte à être rattaché à un réseau LTE, pour effectuer une communication à commutation de paquets, PS, dans lequel la communication PS est apte à être effectuée par l'intermédiaire d'une entité de gestion de mobilité, MME, qui peut être agencée dans un regroupement de MME, c'est-à-dire un groupe de MME pouvant se substituer l'une à l'autre et couvrant sensiblement la même zone géographique, l'équipement utilisateur (UE) étant apte à recevoir des signaux de radiomessagerie (18) de manière à informer l'utilisateur d'appels entrants,
l'unité de commutation (MSC_I) étant apte à émettre des signaux de radiomessagerie (16-1 ; 16-2 ; 16-3) à destination de noeuds MME ;
- la réception (13) d'un appel CS externe entrant ;
- l'exécution d'une détection (20) d'une première MME sélectionnée, en détectant si la première MME sélectionnée est prête ou non ;
- s'il est détecté que la MME sélectionnée (MME_I1) est dans un état non prêt (22), la sélection (24) d'une MME alternative et l'émission d'un message de radiomessagerie (16 ; 16-1) à destination de la MME alternative (MME_I2) (16-1) appartenant au même regroupement de MME que la première MME, dans lequel la sélection (24) de la MME alternative est effectuée en fonction d'une liste prédéterminée d'au moins une MME alternative mémorisée dans l'unité de commutation (MSC),
**caractérisé en ce que**, avant la détection d'un état non prêt,
- la liste prédéterminée est indiquée dans ou résolue à partir d'un message de demande de mise à jour d'emplacement (44, 54) en provenance d'une MME dans le cadre d'une procédure de rattachement ou d'une procédure de mise à jour de trafic/mise à jour d'emplacement ;
ou
- la liste prédéterminée est établie (A2) par l'émission (45, 55), par l'unité de commutation, d'une interrogation de service de nom de domaine, DNS, à un serveur DNS, dans lequel le serveur DNS résout une chaîne DNS en une liste d'adresses de MME possibles.

2. Procédé selon la revendication 1, dans lequel le nom de MME alternative ou la liste prédéterminée d'au moins une MME est sous la forme d'un nom de domaine entièrement qualifié.

3. Procédé selon la revendication 1, dans lequel le message de demande de mise à jour d'emplacement est un message de demande de mise à jour d'emplacement SGsAP.

4. Procédé selon l'une quelconque des revendications 1 à 3, dans lequel l'unité de commutation démarre (18) une minuterie et dans lequel la détection (22) de l'état non prêt implique la non-réception d'un signal de demande de service en provenance de la MME sélectionnée avant l'expiration de la minuterie.

5. Procédé selon l'une quelconque des revendications 1 à 4, dans lequel la détection (22) de l'état non prêt implique la réception d'un signal indicatif d'une défaillance de la MME sélectionnée.

6. Procédé selon l'une quelconque des revendications précédentes, dans lequel il est examiné (15A) si un message de réinitialisation (15) est reçu en provenance d'une MME et, si tel est le cas, il est ensuite déterminé (20) que la MME est dans un état non prêt.

7. Procédé selon l'une quelconque des revendications 1 à 6, dans lequel une liste initiale (A1) est mémorisée dans l'unité de commutation en ce qui concerne des MME alternatives pour sélectionner une MME de desserte qui est dans un état non prêt.

8. Procédé selon la revendication 7, dans lequel la liste initiale dans l'unité de commutation est mise à jour lorsqu'une MME effectue une mise à jour de rattachement (42) ou d'emplacement (52).

9. Procédé pour une entité de gestion de mobilité, MME, apte à envoyer une demande de mise à jour d'emplacement à une unité de commutation (MSC/VLR), dans lequel la MME fournit une liste prédéterminée d'au moins une MME alternative à l'intérieur d'un regroupement de MME dans un message de demande de mise à jour d'emplacement (44, 54), **caractérisé en ce que** la MME fournit :
- une liste prédéterminée qui est indiquée dans ou qui peut être résolue à partir du message de demande de mise à jour d'emplacement (44, 54) provenant de la MME, le message étant émis dans le cadre d'une procédure de rattachement ou d'une procédure de mise à jour de trafic/mise à jour d'emplacement,
dans lequel la sélection (24) d'une MME alternative peut être effectuée en fonction d'une liste prédéterminée d'au moins une MME alternative mémorisée dans l'unité de commutation (MSC) à destination de laquelle le message est émis.

10. Procédé selon la revendication 9, dans lequel le nom de MME alternative ou la liste prédéterminée d'au moins une MME est sous la forme d'un nom de domaine entièrement qualifié.

11. Unité de commutation (MSC_I) dans un réseau dans lequel un équipement utilisateur (UE) est apte à être rattaché et relié à un réseau 2G/3G pour effectuer une communication à commutation de circuits, CS, avec le réseau, ou est apte à être rattaché à un réseau LTE, pour effectuer une communication à commutation de paquets, PS, dans laquelle la communication PS est apte à être effectuée par l'intermédiaire d'une entité de gestion de mobilité, MME, qui peut être agencée dans un regroupement de MME, c'est-à-dire un groupe de MME pouvant se substituer l'une à l'autre et couvrant sensiblement la même zone géographique,
l'équipement utilisateur (UE) étant apte à recevoir des signaux de radiomessagerie (18) de manière à informer l'utilisateur d'appels entrants,
l'unité de commutation (MSC_I) comprenant une unité de commande (CTRL_U1), une mémoire (MEM_1) et une unité d'interface (INT-U1) et un bus interne (B), l'unité de commutation étant apte à émettre des signaux de radiomessagerie (16-1 ; 16-2 ; 16-3) à destination de noeuds MME, pour effectuer :
la réception (13) d'un appel CS externe entrant ;
l'exécution d'une détection (20) d'une première MME sélectionnée, en détectant si la première MME sélectionnée est prête ou non ;
l'unité de commutation (MSC_I) étant en outre apte à effectuer, s'il est détecté que la MME sélectionnée (MME_I1) est dans un état non prêt (22), la sélection (24) d'une MME alternative et l'émission d'un message de radiomessagerie (16 ; 16-1) à destination de la MME alternative (MME_I2) (16-1) appartenant au même regroupement de MME que la première MME,
dans laquelle la sélection (24) de la MME alternative est effectuée en fonction d'une liste prédéterminée d'au moins une MME alternative mémorisée dans l'unité de commutation (MSC),
**caractérisée en ce que**, avant la détection d'un état non prêt,
la liste prédéterminée est indiquée ou résolue à partir d'un message de demande de mise à jour d'emplacement (44, 54) en provenance d'une MME dans le cadre d'une procédure de rattachement ou d'une procédure de mise à jour de trafic/mise à jour d'emplacement ;
ou
la liste prédéterminée est établie (A2) par l'émission (45, 55), par l'unité de commutation, d'une interrogation de service de nom de domaine, DNS, à un serveur DNS, dans laquelle le serveur DNS résout une chaîne DNS en une liste d'adresses de MME possibles.

12. Unité de commutation selon la revendication 11, dans laquelle le nom de MME alternative ou la liste prédéterminée d'au moins une MME est sous la forme d'un nom de domaine entièrement qualifié.

13. Unité de commutation selon la revendication 12, dans laquelle le message de demande de mise à jour d'emplacement est un message de demande de mise à jour d'emplacement SGsAP.

14. Entité de gestion de mobilité, MME, (MME_I), comprenant une unité de commande (CTRL, U2), une mémoire (MEM_2) et une unité d'interface (INT_U2), un bus interne (B), la MME étant à apte à envoyer une demande de mise à jour d'emplacement à une unité de commutation (MSC/VLR), dans laquelle la MME fournit :
- une liste prédéterminée qui est indiquée dans ou qui peut être résolue à partir du message de demande de mise à jour d'emplacement (44, 54) provenant de la MME, le message étant émis dans le cadre d'une procédure de rattachement ou d'une procédure de mise à jour de trafic/mise à jour d'emplacement,
dans lequel la sélection (24) d'une MME alternative peut être effectuée en fonction d'une liste prédéterminée d'au moins une MME alternative mémorisée dans l'unité de commutation (MSC) à destination de laquelle le message est émis.

15. Entité de gestion de mobilité, MME, (MME_I), selon la revendication 14, dans laquelle le message de demande de mise à jour d'emplacement est un message de demande de mise à jour d'emplacement SGsAP.

16. Entité de gestion de mobilité selon la revendication 14 ou 15, dans laquelle le nom de MME alternative ou la liste prédéterminée d'au moins une MME est sous la forme d'un nom de domaine entièrement qualifié.
